# EUROPEAN PATENT APPLICATION

(11) **EP 4 822 816 A1**
(43) Date of publication of application: **14.10.2026**
(21) Application number: 25771592.0
(22) Date of filing: 14.01.2025
(51) Int. Cl.: H01M 10/54, C01D 15/04, C22B 1/08, C22B 3/04, C22B 7/00, C22B 26/12

(54) **AQUEOUS SOLUTION RECOVERY METHOD**

(30) Priority: 14.03.2024 JP 2024039683
(71) Applicant: JFE Steel Corporation, Tokyo 100-0011 (JP)
(72) Inventor: NAGATA Kazehiko, Tokyo 100-0011 (JP); INOUE Yotaro, Tokyo 100-0011 (JP); HINO Yuta, Tokyo 100-0011 (JP)
(74) Representative: Haseltine Lake Kempner LLP
(86) International application number: PCT/JP2025/000808
(87) International publication number: WO 2025/192009

(57) **Abstract**

Provided is an aqueous solution recovery method which can recover lithium, contained in a composite oxide, as an aqueous solution containing lithium.

The aqueous solution recovery method for recovering lithium, contained in a composite oxide, as a lithium-containing aqueous solution includes: a contact step of bringing chlorine or a chlorine compound, in an amount adjusted such that a molar ratio of chlorine to lithium contained in the composite oxide is not less than 1.0 and not more than 5.5, into contact with the composite oxide in a state of not less than 500°C and not more than 1350°C; and an aqueous solution recovery step of bringing an aqueous solution into contact with the chlorine or chlorine compound and the composite oxide that have undergone the contact step, thereby recovering the aqueous solution into which the lithium has been leached.

## Description

### Technical Field

The present invention relates to an aqueous solution recovery method for recovering lithium, contained in a composite oxide obtained by melting lithium-ion batteries, as an aqueous solution containing lithium.

### Background Art

Batteries using lithium (hereinafter referred to as "lithium-ion batteries") are used in relatively small devices such as personal computers and smartphones, as well as in large-sized devices such as electric vehicles and solar power storage systems.

A lithium-ion battery is formed using a casing made of a metal such as iron or aluminum. Inside the casing, there are provided: a positive electrode material including an aluminum foil and a positive electrode active material, such as lithium nickelate or lithium cobaltate, adhered to the aluminum foil; and a negative electrode material including a copper foil and a negative electrode active material, such as graphite, fixed to the surface of the copper foil. A separator made of a porous polypropylene resin film or the like is provided between the positive electrode material and the negative electrode material. The interior of the casing is filled with an electrolytic solution of lithium hexafluorophosphate or the like and is sealed.

Lithium-ion batteries are disposed of as waste lithium-ion batteries due to, for example, performance degradation caused by repeated charging and discharging or the like, or disposal of devices. Defective lithium-ion batteries generated during manufacturing processes are also disposed of as waste lithium-ion batteries. Therefore, with the recent increase in the number of electric vehicles manufactured, the number of lithium-ion batteries that have been manufactured for electric vehicles and are to be disposed of (the number of waste lithium-ion batteries) is expected to increase.

Waste lithium-ion batteries contain valuable metals such as copper, nickel, cobalt, and lithium. Therefore, techniques for recovering and recycling valuable metals in disposal of waste lithium-ion batteries have been developed as measures for resource conservation and the prevention of environmental pollution.

As a method for recovering valuable metals from waste lithium-ion batteries, a pyrometallurgical process has been proposed which involves melting waste lithium-ion batteries at a high temperature and recovering metals, including copper, nickel, and cobalt, from the resulting molten metal. An advantage of the pyrometallurgical process is that metals with low resource value, such as aluminum, are oxidized to form slag, and thus can be easily separated from valuable metals such as copper, nickel, and cobalt.

In the pyrometallurgical process, lithium contained in waste lithium-ion batteries is oxidized to lithium oxide, which forms slag together with aluminum oxide, silicon oxide, calcium oxide, magnesium oxide, and the like. The slag formed has a low lithium content; therefore, it is not easy to recover and reuse the lithium.

Therefore, research and development on methods to recover lithium from slag with a low lithium content is underway. For example, Patent Literature 1 discloses a method for producing Li-containing slag having an increased lithium content by melting raw materials such as waste lithium-ion batteries. The method specifies the ranges of values of Al/Li and Si/Li and the Al and Si contents of the slag. Patent Literature 2 discloses a method which, in a pyrometallurgical process for waste lithium-ion batteries, involves adding a chloride source to molten metal and recovering, as metal fumes, lithium chloride formed in the molten metal.

### Citation List

### Patent Literature

PTL 1: Japanese Unexamined Patent Application Publication No. 2023-173717
PTL 2: Japanese Unexamined Patent Application Publication (Translation of PCT Application) No. 2022-507413

### Summary of Invention

### Technical Problem

However, the method disclosed in Patent Literature 1 requires careful selection of a flux component to be added to molten metal in the pyrometallurgical process. The use of the flux makes it difficult to use (reuse) industrial byproducts for recycling, thus hindering application to practical operation. In the method disclosed in Patent Literature 2, when the lithium chloride formed is recovered as metal fumes, damage to surrounding equipment such as furnace walls may occur due to, for example, adhesion of metal fumes. Therefore, an increase in costs such as maintenance and repair costs is expected, making application to practical operation difficult.

The present invention has been made in view of the above circumstances, and an object of the present invention is to provide an aqueous solution recovery method which can recover lithium, contained in a composite oxide, as an aqueous solution containing lithium.

### Solution to Problem

[1] An aqueous solution recovery method for recovering lithium, contained in a composite oxide, as a lithium-containing aqueous solution, the method including: a contact step of bringing chlorine or a chlorine compound, in an amount adjusted such that a molar ratio of chlorine to lithium contained in the composite oxide is not less than 1.0 and not more than 5.5, into contact with the composite oxide in a state of not less than 500°C and not more than 1350°C; and an aqueous solution recovery step of bringing an aqueous solution into contact with the chlorine or chlorine compound and the composite oxide that have undergone the contact step, thereby recovering the aqueous solution into which the lithium has been leached.
[2] The aqueous solution recovery method according to [1], wherein the chlorine compound contains at least one of an alkali metal chloride and an alkaline earth metal chloride.
[3] The aqueous solution recovery method according to [1] or [2], wherein the composite oxide is slag remaining after recovering a metal containing one or two elements selected from cobalt and nickel through a process of recovering the metal from a molten metal obtained by melting a lithium-ion battery.
[4] The aqueous solution recovery method according to any one of [1] to [3], wherein the aqueous solution to be brought into contact with the chlorine or chlorine compound and the composite oxide that have undergone the contact step has a pH value of not less than 5.0 and not more than 10.0.

### Advantageous Effects of Invention

According to the present invention, lithium contained in a composite oxide can be recovered as an aqueous solution containing lithium.

### Description of Embodiments

Embodiments of the present invention will now be described. The aqueous solution recovery method of the present invention is a method for recovering lithium, contained in a composite oxide, as a lithium-containing aqueous solution.

The composite oxide used may be slag remaining after recovering a metal containing one or two elements selected from cobalt and nickel through a pyrometallurgical process of recovering the metal from a molten metal obtained by melting lithium-ion batteries.

The aqueous solution recovery method of the present invention includes a contact step of bringing chlorine or a chlorine compound, in an amount adjusted such that the molar ratio of chlorine to lithium contained in the composite oxide is not less than 1.0 and not more than 5.5, into contact with the composite oxide in a state of not less than 500°C and not more than 1350°C.

By adjusting the molar ratio of chlorine to lithium contained in the composite oxide to 1.0 or more, the chlorination reaction between the lithium and the chlorine or chlorine compound is promoted.

If the molar ratio of chlorine to lithium contained in the composite oxide is less than 1.0, the chlorination reaction between the lithium and the chlorine or chlorine compound is not promoted, and the lithium cannot be sufficiently recovered. On the other hand, if the molar ratio of chlorine to lithium contained in the composite oxide is too high, the amount of chlorine added relative to lithium is excessive, and a further increase in the supply of the chlorine or chlorine compound does not improve the lithium recovery effect and results in increased processing costs. Therefore, the molar ratio of chlorine to lithium contained in the composite oxide is preferably 5.5 or less, and more preferably 5.0 or less.

The adjustment of the amount of the chlorine or chlorine compound may be performed, prior to contact with the composite oxide, by calculating the mass of lithium contained in the composite oxide, and adjusting the molar ratio of chlorine to lithium to not less than 1.0 and not more than 5.5 based on the calculated mass of lithium. More specifically, the amount of the chlorine or chlorine compound to be brought into contact with the composite oxide may be adjusted such that the molar ratio of chlorine to lithium is not less than 1.0 and not more than 5.5. A method for calculating the mass of lithium is not limited as long as it can calculate the mass of lithium contained in the composite oxide. For example, a portion of the composite oxide may be dissolved in acid, and the mass of lithium may be measured and calculated using inductively coupled plasma atomic emission spectroscopy (ICP-AES). Alternatively, in the process of producing the composite oxide, the mass of lithium may be calculated based on the mass concentration of lithium in each raw material and the weight ratio of each raw material relative to all raw materials.

The contact of the chlorine or chlorine compound with the composite oxide is performed in a state of not less than 500°C and not more than 1350°C. This is because, when the contact is performed in a state of less than 500°C, the chlorination reaction between lithium contained in the composite oxide and the chlorine or chlorine compound is not promoted. Since the chlorination reaction between the lithium and the chlorine or chlorine compound is promoted as the temperature increases, the contact between the chlorine or chlorine compound and the composite oxide is preferably performed in a state of 600°C or higher, and more preferably in a state of 800°C or higher. On the other hand, when the temperature exceeds 1350°C, although the chlorination reaction between the lithium and the chlorine or chlorine compound is promoted to form lithium chloride, volatilization of the lithium chloride occurs, and subsequent leaching of the lithium chloride into an aqueous solution is not promoted, resulting in a decrease in lithium recovery rate.

The chlorine may be chlorine gas. The chlorine compound may be a metal chloride. Specifically, the chlorine compound may contain at least one of an alkali metal chloride and an alkaline earth metal chloride. Alkaline earth metals include beryllium and magnesium. These chlorine compounds and chlorine have higher boiling points than compounds of heavy metals and chlorine. Therefore, by setting the temperature during contact between the chlorine or chlorine compound and the composite oxide to not less than 500°C and not more than 1350°C, volatilization of the chlorine compound and chlorine can be suppressed, and the formation of lithium chloride from lithium contained in the composite oxide can be promoted.

More specifically, the temperature during contact between the chlorine or chlorine compound and the composite oxide may be managed as the temperature of the composite oxide. Alternatively, the temperature during the contact may also be managed as the temperature of the atmosphere in a reaction vessel into which the chlorine or chlorine compound and the composite oxide are charged.

The aqueous solution recovery method of the present invention includes an aqueous solution recovery step of bringing an aqueous solution into contact with the chlorine or chlorine compound and the composite oxide that have undergone the contact step, thereby recovering the aqueous solution into which lithium has been leached.

By the contact between the chlorine or chlorine compound and the composite oxide, the chlorination reaction between lithium contained in the composite oxide and the chlorine or chlorine compound is promoted, and lithium chloride is formed. Accordingly, by bringing an aqueous solution into contact with the chlorine or chlorine compound and the composite oxide that have undergone the contact step, the lithium chloride formed is incorporated into the aqueous solution, whereby lithium is leached into the aqueous solution. Lithium contained in the composite oxide is thus recovered as an aqueous solution into which lithium has been leached.

The time for contact between the chlorine or chlorine compound and the composite oxide is preferably not less than 20 minutes and not more than 180 minutes. By setting the time of the contact step within this range, the chlorination reaction between lithium and the chlorine or chlorine compound is further promoted, and the lithium contained in the composite oxide can be more reliably recovered as lithium that has been leached into the aqueous solution. If the contact time exceeds 180 minutes, no further improvement in lithium recovery efficiency can be achieved despite the extended time.

The aqueous solution to be brought into contact with the chlorine or chlorine compound and the composite oxide preferably has a pH value of not less than 5.0 and not more than 10.0. By setting the pH value of the aqueous solution within this range, dissolution of heavy metals (nickel, cobalt, manganese, etc.) into the aqueous solution is suppressed, while leaching of lithium, which has few coexisting elements, into the aqueous solution is promoted. Pure water or the like may be used as the aqueous solution.

From the viewpoint of recovering the aqueous solution, into which lithium has been leached, by the aqueous solution recovery method of the present invention, the lithium-containing composite oxide preferably has a lithium content of 0.5% by mass or more, and more preferably 1.0% by mass or more, calculated as lithium element.

### EXAMPLES

Results obtained by practicing the aqueous solution recovery method of the present invention will now be described. In each example, one of four oxides (A to D) differing in the molar ratio of calcium oxide to silicon dioxide (CaO/SiO₂) and in the mass of lithium contained (% by mass) was used as a lithium-containing composite oxide. The compositional information of the oxides (A to D) used in the examples is shown in Table 1.

**[Table 1]**

| Oxide | CaO/SiO₂ [-] | Mass of lithium [% by mass] |
|---|---|---|
| Oxide A | 0.5 | 4.1 |
| Oxide B | 1.1 | 1.4 |
| Oxide C | 1.6 | 4.5 |
| Oxide D | 2.0 | 0.8 |

A chlorine compound was brought into contact with each of the oxides (A to D) shown in Table 1 at a predetermined molar ratio of chlorine to lithium contained in each oxide, and they were held at a predetermined temperature for 60 minutes. An aqueous solution was prepared in an amount equal to 30 times the total weight of the chlorine compound and the oxide. The chlorine compound and the oxide were immersed in the aqueous solution, and the mixture was stirred for 120 minutes, followed by filtration to obtain an aqueous solution containing lithium. Calcium chloride (CaCl₂) was used as the chlorine compound. Pure water having a pH value of not less than 5.0 and not more than 10.0 was used as the aqueous solution.

Subsequently, the content (% by mass) of lithium in the resulting aqueous solution was measured, and the percentage (%) of the lithium content (% by mass) of the aqueous solution based on the mass (% by mass) of lithium contained in each of the oxides (A to D) was calculated as the lithium recovery rate. The results are shown in Tables 2 and 3.

**[Table 2]**

| | Oxide | Cl/Li [mol/mol] | Temp. during contact [°C] | Lithium recovery rate [%] |
|---|---|---|---|---|
| Inventive Ex. 1 | Oxide A | 1.0 | 500 | 56 |
| Inventive Ex. 2 | Oxide A | 1.2 | 500 | 53 |
| Inventive Ex. 3 | Oxide A | 1.8 | 500 | 56 |
| Inventive Ex. 4 | Oxide A | 2.7 | 500 | 73 |
| Inventive Ex. 5 | Oxide A | 4.5 | 500 | 72 |
| Inventive Ex. 6 | Oxide A | 1.0 | 600 | 61 |
| Inventive Ex. 7 | Oxide A | 1.2 | 600 | 66 |
| Inventive Ex. 8 | Oxide A | 1.8 | 600 | 76 |
| Inventive Ex. 9 | Oxide A | 2.7 | 600 | 81 |
| Inventive Ex. 10 | Oxide A | 4.5 | 600 | 72 |
| Inventive Ex. 11 | Oxide A | 1.0 | 800 | 72 |
| Inventive Ex. 12 | Oxide A | 1.2 | 800 | 89 |
| Inventive Ex. 13 | Oxide A | 1.8 | 800 | 87 |
| Inventive Ex. 14 | Oxide A | 2.7 | 800 | 89 |
| Inventive Ex. 15 | Oxide A | 4.5 | 800 | 88 |
| Inventive Ex. 16 | Oxide A | 1.0 | 1000 | 66 |
| Inventive Ex. 17 | Oxide A | 1.2 | 1000 | 80 |
| Inventive Ex. 18 | Oxide A | 1.8 | 1000 | 90 |
| Inventive Ex. 19 | Oxide A | 2.7 | 1000 | 87 |
| Inventive Ex. 20 | Oxide A | 4.5 | 1000 | 91 |
| Inventive Ex. 21 | Oxide A | 1.0 | 1200 | 60 |
| Inventive Ex. 22 | Oxide A | 1.2 | 1200 | 75 |
| Inventive Ex. 23 | Oxide A | 1.8 | 1200 | 69 |
| Inventive Ex. 24 | Oxide A | 2.7 | 1200 | 72 |
| Inventive Ex. 25 | Oxide A | 4.5 | 1200 | 75 |
| Inventive Ex. 26 | Oxide A | 1.0 | 1350 | 53 |
| Inventive Ex. 27 | Oxide A | 1.2 | 1350 | 53 |
| Inventive Ex. 28 | Oxide A | 1.8 | 1350 | 72 |
| Inventive Ex. 29 | Oxide A | 2.7 | 1350 | 75 |
| Inventive Ex. 30 | Oxide A | 4.5 | 1350 | 64 |
| Inventive Ex. 31 | Oxide A | 5.5 | 800 | 92 |
| Inventive Ex. 32 | Oxide B | 1.8 | 800 | 84 |
| Inventive Ex. 33 | Oxide B | 2.7 | 800 | 94 |
| Inventive Ex. 34 | Oxide B | 1.8 | 1000 | 78 |
| Inventive Ex. 35 | Oxide B | 2.7 | 1000 | 88 |
| Inventive Ex. 36 | Oxide B | 5.5 | 800 | 90 |
| Inventive Ex. 37 | Oxide C | 1.8 | 800 | 89 |
| Inventive Ex. 38 | Oxide C | 2.7 | 800 | 92 |
| Inventive Ex. 39 | Oxide C | 1.8 | 1000 | 84 |
| Inventive Ex. 40 | Oxide C | 2.7 | 1000 | 92 |
| Inventive Ex. 41 | Oxide C | 5.5 | 800 | 87 |
| Inventive Ex. 42 | Oxide D | 1.8 | 800 | 82 |
| Inventive Ex. 43 | Oxide D | 2.7 | 800 | 86 |
| Inventive Ex. 44 | Oxide D | 1.8 | 1000 | 79 |
| Inventive Ex. 45 | Oxide D | 2.7 | 1000 | 91 |
| Inventive Ex. 46 | Oxide D | 5.5 | 800 | 90 |

**[Table 3]**

| | Oxide | Cl/Li [mol/mol] | Temp. during contact [°C] | Lithium recovery rate [%] |
|---|---|---|---|---|
| Comp. Ex. 1 | Oxide A | 1.8 | 400 | 33 |
| Comp. Ex. 2 | Oxide A | 2.7 | 400 | 40 |
| Comp. Ex. 3 | Oxide A | 4.5 | 400 | 40 |
| Comp. Ex. 4 | Oxide A | 1.8 | 1400 | 18 |
| Comp. Ex. 5 | Oxide A | 2.7 | 1400 | 25 |
| Comp. Ex. 6 | Oxide A | 4.5 | 1400 | 30 |
| Comp. Ex. 7 | Oxide A | 0.5 | 600 | 30 |
| Comp. Ex. 8 | Oxide A | 0.5 | 800 | 35 |
| Comp. Ex. 9 | Oxide A | 0.5 | 1000 | 34 |
| Comp. Ex. 10 | Oxide A | 0.5 | 1200 | 32 |
| Comp. Ex. 11 | Oxide B | 2.7 | 400 | 35 |
| Comp. Ex. 12 | Oxide B | 2.7 | 1400 | 25 |
| Comp. Ex. 13 | Oxide B | 0.5 | 1000 | 32 |
| Comp. Ex. 14 | Oxide C | 2.7 | 400 | 32 |
| Comp. Ex. 15 | Oxide C | 2.7 | 1400 | 14 |
| Comp. Ex. 16 | Oxide C | 0.5 | 1000 | 35 |
| Comp. Ex. 17 | Oxide D | 2.7 | 400 | 39 |
| Comp. Ex. 18 | Oxide D | 2.7 | 1400 | 17 |
| Comp. Ex. 19 | Oxide D | 0.5 | 1000 | 34 |

Comparative Examples 1 to 19 shown in Table 3 were conducted under conditions where the molar ratio of chlorine to lithium (Cl/Li) contained in each of the oxides A to D, which are composite oxides, was set to 0.5, or the temperature during contact between each oxide and the chlorine compound was set to 1400°C, or the temperature during contact between each oxide and the chlorine compound was set to 400°C. As a result, the lithium recovery rate was limited to a maximum of 40% relative to the total amount of lithium contained in each oxide.

Inventive Examples 1 to 31 shown in Table 2 were conducted under conditions where the molar ratio of chlorine to lithium (Cl/Li) contained in oxide A was set to not less than 1.0 and not more than 5.5, and the temperature during contact between oxide A and the chlorine compound was set to not less than 500°C and not more than 1350°C. 50% or more of the total amount of lithium contained in oxide A could be recovered as an aqueous solution.

Inventive Examples 32 to 46 used oxides B, C, and D as composite oxides. These examples were conducted under conditions where the molar ratio of chlorine to lithium (Cl/Li) contained in each of oxides B, C, and D was set to not less than 1.8 and not more than 5.5, and the temperature during contact between each of oxides B, C, and D and the chlorine compound was set to not less than 800°C and not more than 1000°C. As a result, 70% or more of the total amount of lithium contained in each of oxides B, C, and D could be recovered as an aqueous solution.

The above results indicate that lithium contained in composite oxides can be recovered as a lithium-containing aqueous solution by the aqueous solution recovery method of the present invention. The results also indicate that the aqueous solution recovery method of the present invention is applicable to composite oxides containing lithium and having various compositions, and can recover a lithium-containing aqueous solution without causing volatilization of chlorine or a chlorine compound.

## Claims

1. An aqueous solution recovery method for recovering lithium, contained in a composite oxide, as a lithium-containing aqueous solution, the method comprising:
a contact step of bringing chlorine or a chlorine compound, in an amount adjusted such that a molar ratio of chlorine to lithium contained in the composite oxide is not less than 1.0 and not more than 5.5, into contact with the composite oxide in a state of not less than 500°C and not more than 1350°C; and
an aqueous solution recovery step of bringing an aqueous solution into contact with the chlorine or chlorine compound and the composite oxide that have undergone the contact step, thereby recovering the aqueous solution into which the lithium has been leached.

2. The aqueous solution recovery method according to claim 1, wherein the chlorine compound contains at least one of an alkali metal chloride and an alkaline earth metal chloride.

3. The aqueous solution recovery method according to claim 1 or 2, wherein the composite oxide is slag remaining after recovering a metal containing one or two elements selected from cobalt and nickel through a process of recovering the metal from a molten metal obtained by melting a lithium-ion battery.

4. The aqueous solution recovery method according to any one of claims 1 to 3, wherein the aqueous solution to be brought into contact with the chlorine or chlorine compound and the composite oxide that have undergone the contact step has a pH value of not less than 5.0 and not more than 10.0.
